# EUROPEAN PATENT SPECIFICATION

(11) **EP 2 955 872 B1**
(45) Date of publication and mention of the grant of the patent: **12.10.2016**
(21) Application number: 14172145.6
(22) Date of filing: 12.06.2014
(51) Int. Cl.: H04L 9/08

(54) **Method for configuring a secure element, key derivation program, computer program product and configurable secure element**
Verfahren zur Konfiguration eines sicheren Elements, Schlüsselableitungsprogramm, Computerprogrammprodukt und konfigurierbares sicheres Element
Procédé de configuration d'un élément sécurisé, programme de dérivation de clé, produit de programme informatique et élément sécurisé configurable

(43) Date of publication of application: 16.12.2015
(73) Proprietor: NXP B.V., 5656 AG Eindhoven (NL)
(72) Inventor: Warnez, Dimitri, 5656 AG Eindhoven (NL); Gouraud, Thierry, 5656 AG Eindhoven (NL)
(74) Representative: Krott, Michel

(56) References cited:
- EP-A2- 1 004 992
- US-A1- 2012 130 838
- US-B1- 6 367 011
- Nxp B.V.: "AN10922 Symmetric key diversifications", , 17 March 2010 (2010-03-17), XP055151671, Retrieved from the Internet: URL:http://www.nxp.com/documents/applicati on_note/AN10922.pdf [retrieved on 2014-11-07]

## Description

### FIELD

The present disclosure relates to a method for configuring a secure element. Furthermore, the present disclosure relates to a corresponding key derivation program, a corresponding computer program product and a corresponding configurable secure element.

### BACKGROUND

Smart cards and mobile devices, such as smart phones, may be used for carrying out many kinds of transactions. For example, smart cards and mobile devices may substitute traditional public transportation tickets or loyalty cards. In order to fulfill these functions, a smart card or mobile device typically contains a so-called secure element. A secure element may for example be an embedded chip, more specifically a tamper-resistant integrated circuit with installed or pre-installed smart-card-grade applications, for instance payment applications, which have a prescribed functionality and a prescribed level of security. Furthermore, a secure element may implement security functions, such as cryptographic functions and authentication functions.

In order to be used in transactions, a secure element needs to be configured. More specifically, application keys need to be injected into the secure element. For example, if a secure element is embedded in an access control card, then an application key may be used for the purpose of authenticating a particular user, such that the user may access a building. If the secure element is embedded in a payment card, then an application key may be used to generate a cryptographic signature for use in a transaction, for example. Typically, the injection of application keys has to be done using secure equipment, secure environments and/or complex back-ends. For example, if the secure element is embedded in a mobile device, then a so-called Trusted Service Manager (TSM) may perform this injection. The injection of application keys may be a costly and relatively complex operation.

For example, EP 1 622 098 A1 describes a method for completing the manufacturing phases of an IC card performing a final and secure personalization phase of a semi-finished IC card including a non volatile memory portion wherein personalization data and information are stored in secret allocations, wherein certain steps are performed such that personalization data are stored in the card without any knowledge about the location wherein the data will be stored. More specifically, according to the described method the knowledge of the data location is hidden for the entity performing the final personalization phase. This known method illustrates that relatively complex measures are taken to ensure that the personalization process is secure.

The application note 'AN10922: Symmetric key diversifications', revision 1.3, published by NXP Semiconductors on 17 March 2010, describes a key diversification method which may be used to provide unique keys to secure elements.

US 2012/0130838 A1 describes techniques for personalizing secure elements in NFC devices to enable various secure transactions over a network (wired and/or wireless network). With a personalized secure element (hence secured element) in place, techniques for provisioning various applications or services are also provided.

### SUMMARY

There is disclosed a method for configuring a secure element, the method comprising: storing an application in the secure element; storing a master key in the secure element; storing a key derivation program in the secure element; generating, by the key derivation program, at least one application key for use by the application, wherein said generating comprises deriving the application key from the master key and an identifier of the secure element.

In one or more illustrative embodiments, a microcontroller unit of the secure element stores the application, the master key and the key derivation program, and the microcontroller unit executes the key derivation program in order to generate the application key.

In one or more further illustrative embodiments, the key derivation program and the master key are comprised in a single software package.

In one or more further illustrative embodiments, the identifier of the secure element is a unique identifier (UID) of the secure element.

In one or more further illustrative embodiments, the application is a virtual smart card application.

In one or more further illustrative embodiments, the virtual smart card application is a MIFARE application.

Furthermore, there is disclosed a key derivation program for use in a method of the kind set forth.

Furthermore, there is disclosed a computer program product comprising instructions which, when being executed by a processing unit, carry out or control a method of the kind set forth.

Furthermore, there is disclosed a configurable secure element which comprises an application, a master key and a key derivation program, and which is arranged to execute the key derivation program, such that the key derivation program, when being executed, generates at least one application key for use by the application by deriving the application key from the master key and an identifier of the secure element.

In one or more further illustrative embodiments, the secure element comprises a microcontroller unit, wherein the microcontroller unit is arranged to store the application, the master key and the key derivation program, and wherein the microcontroller unit is further arranged to execute the key derivation program.

Furthermore, a smart card is conceived which comprises a secure element of the kind set forth.

Furthermore, a mobile device is conceived which comprises a secure element of the kind set forth.

### DESCRIPTION OF DRAWINGS

Embodiments will be described in more detail with reference to the appended drawings, in which:
Fig. 1 shows an example of a mobile device comprising a secure element;
Fig. 2 shows an illustrative embodiment of a method for configuring a secure element.

### DESCRIPTION OF EMBODIMENTS

In accordance with the present disclosure, the key generation for, for example, a smart card application may be performed on-card. Since the personalization is performed on the card, i.e. not off-card by means of specialized secure equipment, the personalization of smart cards may become easier and cheaper. It is noted that the disclosed method may be applied both to secure elements embedded in smart cards and to secure elements embedded in mobile devices, such as NFC-enabled mobile phones. More specifically, the disclosed method may be used to advantage in mobile devices capable of executing virtual smart card applications, for example MIFARE® applications.

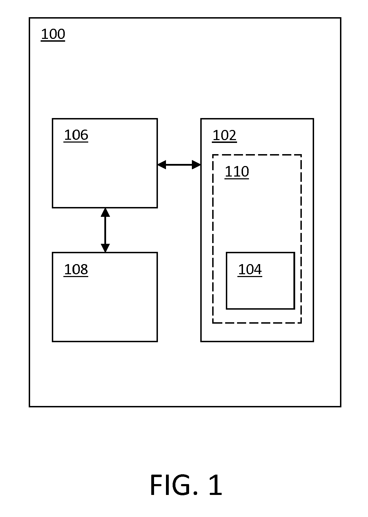

Fig. 1 shows an example of a mobile device 100 comprising a secure element 102. In addition to the secure element 102, the mobile device 100 may comprise an NFC controller 106 and an NFC antenna 108, in order to establish near-field communication between the mobile device 100 and an NFC reader device (not shown). For example, the NFC reader device may be embedded in or connected to a Point-of-Sale (POS) terminal, in order to carry out monetary transactions. In another example, the NFC reader device may be embedded in or connected to a check-in/check-out terminal in a public transportation system. The secure element 102 may comprise a memory unit 104 in which an application may have been stored. The application may be a payment application, for example. The application may require one or more application keys, in particular cryptographic keys, in order to perform cryptographic operations for protecting payment data. In accordance with the present disclosure, these application keys are generated in the secure element, in particular by a key derivation program that may have been stored, for example, in the same memory unit 104 in which the application resides.

Optionally, in one or more illustrative embodiments, the secure element may comprise a microcontroller unit 110. In that case, the memory unit 104 may be embedded in the microcontroller unit 110. The microcontroller unit may store the application, the master key and the key derivation program in its embedded memory 104. Furthermore, the microcontroller unit may execute the key derivation program. Thereby, the derivation of the application key is confined to a relatively secure environment.

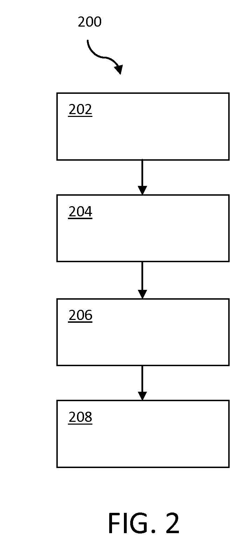

Fig. 2 shows an illustrative embodiment of a method 200 for configuring a secure element. The secure element is configured by storing, at 202, an application in the secure element, at 204 storing a master key in the secure element, and at 206 storing a key derivation program in the secure element. Furthermore, at 208, the key derivation program generates at least one application key for use by the application, in particular by deriving the application key from the master key and an identifier of the secure element.

Thus, a large amount of secure elements may share the same key derivation program and the same master key, which makes the management of said secure elements relatively easy and cheap. The key derivation program may use IC-specific data, i.e. data which are specific to the secure element, as a basis for deriving personalized keys, i.e. application keys. For example, the key derivation program may derive one or more application keys from the master key and the unique identifier (UID) of the secure element. This identifier is by definition unique and therefore facilitates the generation of a unique application key. It is noted that algorithms for deriving a key from a master key and a further value, such as an identifier, are known as such.

In one or more illustrative embodiments, the key derivation program and the master key may be comprised in a single software package. This facilitates the transfer of the master key to the secure element. The key derivation program may be loaded into the secure element by the manufacturer or issuer of the secure element, for example. The key derivation program may be loaded using a secure loading process.

In an illustrative use case, a contactless loyalty card may store a certain value in the form of points in its secure element. This value may need to be changed, for example if said points are exchanged for goods or services by a corresponding loyalty application (app). For example, a back-end system may request the loyalty app to decrease said value if goods or services are ordered by the card owner. In order to change said value, authentication towards the secure element of said card may be required using a specific user key, i.e. a loyalty application key. Loyalty application keys typically differ per secure element. In accordance with the present disclosure, a key derivation program and a master key have been stored in the secure element, for example by the manufacturer or issuer of the secure element, or by the manufacturer or issuer of the loyalty card. The key derivation program derives the loyalty application key from the master key and the UID of the secure element. Then, the key derivation program may provide the loyalty application key to the loyalty app. A back-end system may derive the same loyalty application key using the same key derivation program, master key and UID, in order to authenticate itself to the loyalty app, thereby enabling said authentication towards the secure element.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: mobile device
- 102: secure element
- 104: memory unit
- 106: NFC controller
- 108: NFC antenna
- 110: microcontroller unit
- 200: configuration method
- 202: store application
- 204: store master key
- 206: store key derivation program
- 208: generate application key

## Claims

1. A method (200) for configuring a secure element (102), the method comprising:
- storing an application (202) in the secure element (102);
- storing (204) a master key in the secure element (102);
- storing (206) a key derivation program in the secure element (102);
the method being **characterized by**:
- generating (208), by the key derivation program, at least one application key for use by the application, wherein said generating comprises deriving the application key from the master key and an identifier of the secure element (102).

2. A method (200) as claimed in claim 1, wherein a microcontroller unit (110) of the secure element (102) stores the application, the master key and the key derivation program, and wherein the microcontroller unit (110) executes the key derivation program in order to generate the application key.

3. A method (200) as claimed in claim 1 or 2, wherein the key derivation program and the master key are comprised in a single software package.

4. A method (200) as claimed in any preceding claim, wherein the identifier of the secure element (102) is a unique identifier, UID, of the secure element (102).

5. A method (200) as claimed in any preceding claim, wherein the application is a virtual smart card application.

6. A method (200) as claimed in claim 5, wherein the virtual smart card application is a MIFARE application.

7. A key derivation program adapted to carry out a method (200) as claimed in any preceding claim.

8. A computer program product comprising instructions which, when being executed by a processing unit, cause said processing unit to carry out or control a method (200) as claimed in any of claims 1 to 6.

9. A configurable secure element (102) comprising:
- an application;
- a master key;
- a key derivation program;
the secure element (102) being arranged to execute the key derivation program, **characterized in that** the key derivation program, when being executed, generates at least one application key for use by the application by deriving the application key from the master key and an identifier of the secure element (102).

10. A secure element (102) as claimed in claim 9, comprising a microcontroller unit (110), wherein the microcontroller unit (110) is arranged to store the application, the master key and the key derivation program, and wherein the microcontroller unit (110) is further arranged to execute the key derivation program.

11. A smart card comprising a secure element (102) as claimed in claim 9 or 10.

12. A mobile device (100) comprising a secure element (102) as claimed in claim 9 or 10.

## Patentansprüche

1. Ein Verfahren (200) zum Konfigurieren eines sicheren Elements (102), wobei das Verfahren aufweist:
Speichern einer Anwendung (202) in dem sicheren Element (102);
Speichern (204) eines Hauptschlüssels in dem sicheren Element (102);
Speichern (206) eines Schlüssel Ableitungsprogrammes in dem sicheren Element (102);
wobei das Verfahren **gekennzeichnet ist durch**:
Generieren (208), mittels des Schlüssel Ableitungsprogrammes, zumindest eines Anwendungsschlüssels zum Verwenden mittels der Anwendung, wobei das Generieren aufweist Ableiten des Anwendungsschlüssels von dem Hauptschlüssel und einem Identifikator des sicheren Elements (102).

2. Ein Verfahren (200) gemäß Anspruch 1, wobei eine Mikrocontrollereinheit (110) des sicheren Elements (102) die Anwendung, den Hauptschlüssel und das Schlüssel Ableitungsprogramm speichert und wobei die Mikrocontrollereinheit (110) das Schlüssel Ableitungsprogramm ausführt, um den Anwendungsschlüssel zu generieren.

3. Ein Verfahren (200) gemäß Anspruch 1 oder 2, wobei das Schlüssel Ableitungsprogramm und der Hauptschlüssel in einem einzelnen Softwarepacket beinhaltet sind.

4. Ein Verfahren (200) gemäß einem der vorhergehenden Ansprüche, wobei der Identifikator des sicheren Elements (102) ein Unique Identifikator, UID, des sicheren Elements (102) ist.

5. Ein Verfahren (200) gemäß einem der vorhergehenden Ansprüche, wobei die Anwendung eine virtuelle Chipkarten Anwendung ist.

6. Ein Verfahren (200) gemäß Anspruch 5, wobei die virtuelle Chipkarten Anwendung eine MIFARE Anwendung ist.

7. Ein Schlüssel Ableitungsprogramm, welches eingerichtet ist, um ein Verfahren (200) gemäß einem der vorhergehenden Ansprüche auszuführen.

8. Ein Computer Programmprodukt, welche Instruktionen aufweist, welche, wenn mittels einer Prozessoreinheit ausgeführt, die Prozessoreinheit veranlasst ein Verfahren (200) gemäß einem der Ansprüche 1 bis 6 auszuführen oder zu steuern.

9. Ein konfigurierbares sicheres Element (102) aufweisend:
eine Anwendung;
einen Hauptschlüssel;
ein Schlüssel Ableitungsprogramm;
wobei das sichere Element (102) eingerichtet ist das Schlüssel Ableitungsprogram auszuführen, **dadurch gekennzeichnet,**
**dass** das Schlüssel Ableitungsprogramm, wenn es ausgeführt wird, zumindest einen Anwendungsschlüssel generiert zum Verwenden mittels der Anwendung mittels Ableitens des Anwendungsschlüssels von dem Hauptschlüssel und einem Identifikator des sicheren Elements (102).

10. Ein sicheres Element (102) gemäß Anspruch 9, aufweisend eine Mikrocontrollereinheit (110), wobei die Mikrocontrollereinheit (110) eingerichtet ist, um zu speichern die Anwendung, den Hauptschlüssel und das Schlüssel Ableitungsprogramm und wobei die Mikrocontrollereinheit (110) ferner eingerichtet ist das Schlüssel Ableitungsprogramm auszuführen.

11. Eine Chipkarte, welche ein sicheres Element (102) gemäß Anspruch 9 oder 10 aufweist.

12. Eine mobile Vorrichtung (100), welche ein sicheres Element (102) gemäß Anspruch 9 oder 10 aufweist.

## Revendications

1. Procédé (200) de configuration d'un élément sécurisé (102), le procédé comprenant :
- la mémorisation d'une application (202) dans l'élément sécurisé (102) ;
- la mémorisation (204) d'une clé principale dans l'élément sécurisé (102) ;
- la mémorisation (206) d'un programme de dérivation de clé dans l'élément sécurisé (102) ;
le procédé étant **caractérisé par** :
- la génération (208), par le programme de dérivation de clé, d'au moins une clé d'application destinée à être utilisée par l'application, ladite génération comprenant la dérivation de la clé d'application à partir de la clé principale et d'un identificateur de l'élément sécurisé (102).

2. Procédé (200) selon la revendication 1, dans lequel une unité formant microcontrôleur (110) de l'élément sécurisé (102) mémorise l'application, la clé principale et le programme de dérivation de clé, et dans lequel l'unité formant microcontrôleur (110) exécute le programme de dérivation de clé dans le but de générer la clé d'application.

3. Procédé (200) selon la revendication 1 ou 2, dans lequel le programme de dérivation de clé et la clé principale sont contenus dans un seul et même progiciel.

4. Procédé (200) selon l'une quelconque des revendications précédentes, dans lequel l'identificateur de l'élément sécurisé (102) est un identificateur unique, UID, de l'élément sécurisé (102).

5. Procédé (200) selon l'une quelconque des revendications précédentes, dans lequel l'application est une application de carte à puce virtuelle.

6. Procédé (200) selon la revendication 5, dans lequel l'application de carte à puce virtuelle est une application MIFARE.

7. Programme de dérivation de clé adapté à mettre en oeuvre un procédé (200) selon l'une quelconque des revendications précédentes.

8. Produit-programme d'ordinateur comprenant des instructions qui, une fois exécutées par une unité de traitement, amènent ladite unité de traitement à mettre en oeuvre ou à piloter un procédé (200) selon l'une quelconque des revendications 1 à 6.

9. Elément sécurisé configurable (102) comprenant :
- une application ;
- une clé principale ;
- un programme de dérivation de clé ;
l'élément sécurisé (102) étant conçu pour exécuter le programme de dérivation de clé,
**caractérisé en ce que** le programme dérivation de clé, une fois exécuté, génère au moins une clé d'application destinée à être utilisée par l'application en dérivant la clé d'application à partir de la clé principale et d'un identificateur de l'élément sécurisé (102).

10. Elément sécurisé (102) selon la revendication 9, comprenant une unité formant microcontrôleur (110), dans lequel l'unité formant microcontrôleur (110) est conçue pour mémoriser l'application, la clé principale et le programme de dérivation de clé, et dans lequel l'unité formant microcontrôleur (110) est conçue en outre pour exécuter le programme de dérivation de clé.

11. Carte à puce comprenant un élément sécurisé (102) selon la revendication 9 ou 10.

12. Dispositif mobile (100) comprenant un élément sécurisé (102) selon la revendication 9 ou 10.
